(19) Europäisches Patentamt
European Patent Office
Office européen des brevets

(11) **EP 2 770 322 B1**

## (12) EUROPEAN PATENT SPECIFICATION

(45) Date of publication and mention
of the grant of the patent:
**16.01.2019 Bulletin 2019/03**

(51) Int Cl.:
**G01N 21/88** *(2006.01)*          **G01N 21/95** *(2006.01)*
**G06T 7/00** *(2017.01)*

(21) Application number: **13156832.1**

(22) Date of filing: **26.02.2013**

(54) **Method and system for detecting defects in painting of components, in particular of motor-vehicle bodies**

Verfahren und System zur Erkennung von Mängeln bei der Lackierung von Komponenten, insbesondere von Kraftfahrzeugaufbauten

Procédé et système pour détecter les défauts dans la peinture de composants, en particulier de carrosseries de véhicules automobiles

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.08.2014 Bulletin 2014/35**

(73) Proprietor: **C.R.F. Società Consortile per Azioni**
**10043 Orbassano (Torino) (IT)**

(72) Inventor: **D'Angelo, Giuseppe**
**10043 Orbassano (Torino) (IT)**

(74) Representative: **Notaro, Giancarlo**
**Buzzi, Notaro & Antonielli d'Oulx**
**Corso Vittorio Emanuele II, 6**
**10123 Torino (IT)**

(56) References cited:
**EP-A1- 1 092 973          EP-A1- 2 492 668**
**DE-A1- 10 110 994          GB-A- 2 262 339**
**US-A- 4 918 321          US-A1- 2004 047 498**
**US-B1- 6 941 016          US-B1- 6 983 065**

**Description**

The present invention refers to a method for detecting defects in painting of components, in particular of motor-vehicle bodies of the type comprising acquiring an image of a surface of the components which has been painted, processing the image to obtain contours in said image, said processing including filtering the image, estimating the defects by estimation of the boundaries identified by said contours.

In the specific case of monitoring painting quality of motor-vehicle bodies, there still arises the need of detecting various types of vehicle body painting defects, substantially classifiable in three different categories: small defects, such as for example small spots, medium defects, such as for example "orange peel" effects, and large defects, such as for example paint dripping on the edges of the vehicle body. Regardless of the dimensions thereof, the defects may also be of various types: scratches, linings, peeling, alteration or absence of colour etc.

Method are known which acquire an image of a painted surface of a component of a motor vehicle body and through image processing obtain contours. Such a method is disclosed in US 6941016 B1.

The object of the present invention is that of providing a monitoring system of the type described above capable of searching all the abovementioned types of defects and if necessary and desired also marking thereof and capable of being used along a production line without varying the cycle time of the line.

A further object of the invention is that of providing a system of the previously indicated type capable of precisely and accurately detecting the painting quality and in an extremely rapid manner.

A further object of the invention is that of providing a system of the previously indicated type that is relatively simple, inexpensive and reliable.

With the aim of attaining such objects, the invention aims at providing a method according to claim 1. The monogenic filter is a Gaussian derivative filter.

Due to the abovementioned characteristics, the method and the system according to the invention is capable of precisely and rapidly detecting the defects in the painting, with a high resolution.

According to a further preferred characteristic, the electronic means which process the signals coming from the camera are programmed for acquiring the images acquired by the camera with a predefined frame rate, for extracting contours from said images, performing a classification step on boundaries obtained by an estimation of boundaries identified by said contours in order to identify defects.

According to a another preferred characteristic, the electronic means which process the signals coming from the camera are programmed to classify the defects obtained by said estimation of boundaries.

The invention also has the object of providing the system implementing the method according to according to claim 7.

Further characteristics and advantages of the invention shall be apparent from the description that follows with reference to the attached drawings, provided purely by way of non-limiting example, wherein:

- Figure 1 is a schematic perspective view of a detecting system implementing the method according to the invention, arranged beside a production line along which the components to be examined move;
- Figure 2 is schematic view of the essential elements part of the monitoring head, also illustrating the movement trajectory of the monitoring head with respect to the monitored surface;
- Figure 3 is a schematic perspective view of the source of light used in the system according to the invention;
- Figure 4 is a flow diagram representing the operations of the detecting method according to the invention;
- Figure 5 represents a digital image before and after an erosion step comprised in the method of the invention;
- Figure 6 shows a different representation of the image of Figure 5
- Figure 7 is a diagram showing quantities processed by the method according to the invention.

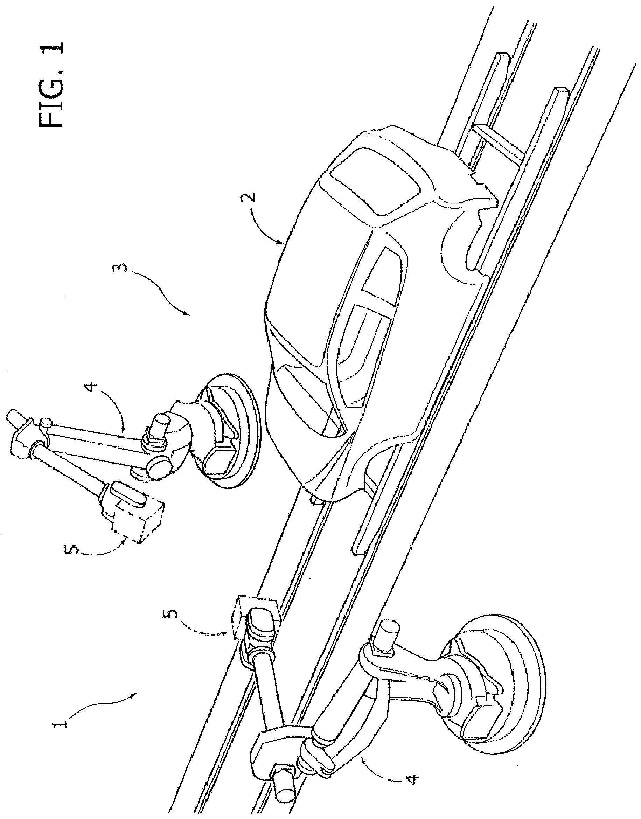

In Figure 1, the reference number 1 designates as a whole a production line, illustrated only schematically in the drawing, along which there advance motor-vehicle bodies 2 on which a paint layer has been applied, in the context of a painting operation. Such a paint layer can be also a primer layer. The reference number 3 designates a station for monitoring the quality of the paint layer, comprising a pair of multi-axis manipulator robots 4, of any known type, prearranged at the two sides of the line 1 for analysing simultaneously the left-hand half and the right-hand half of the surface of each body 2. Each robot 4 has its distal wrist that carries a monitoring head 5 for execution of the method according to the invention.

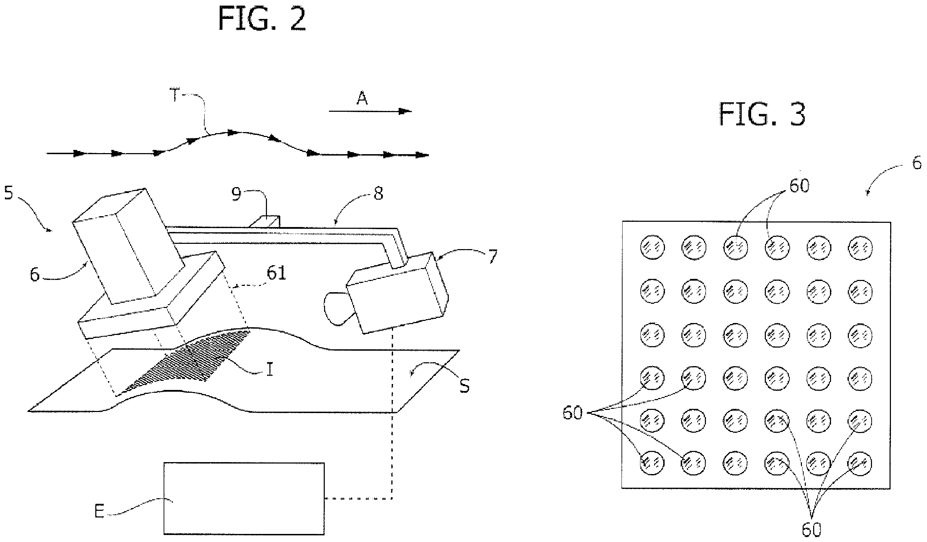

As illustrated schematically in Figure 2, the monitoring head 5 comprises a light source 6 and a video-camera 7, which are supported in a pre-set fixed position with respect to one another by a supporting frame 8 having an attachment 9 of any known type (not illustrated) for fast connection to the wrist of the respective robot 4.

In the exemplary embodiment the electronic control unit of each robot 4 feeds the monitoring head 5 in the direction of advance A of the bodies 2 along the line 1, with a speed of advance higher than the speed of advance of the bodies 2, so as to create a relative movement between the monitoring head 5 and each body 2, sufficient for carrying out scanning of the entire surface of the body, preferably without the need to stop the body at the monitoring station 3. In the course of advance in the direction A, the monitoring head 5 is moved also in a direction orthogonal to the direction A so that it will follow a path T corresponding to the profile of the surface S to be monitored in such a way that both the light source 6 and the videocamera 7 remain constantly at the same distance from the surface S.

With reference to Figure 3, the light source 6 comprises an orderly array of LED sources 60 that gives rise to a collimated beam of light 61 that illuminates an area I of the surface S with a light intensity substantially uniform in all the points of said area I.

The videocamera 7 is a CCD videocamera of any known conventional and standard type for detection of the image of the illuminated area I reflected by the surface S. For this purpose, the orientation of the source 6 and of the videocamera 7 is of course such as to guarantee the maximum optical efficiency, with the source 6 the optical axis of which is inclined by an angle preferably of between 20° and 30° with respect to the surface to be monitored S and the videocamera 7 is also inclined so as to be specular by a corresponding angle with respect to the surface itself.

The signals at output from the videocamera 7 are sent to an electronic processing unit E.

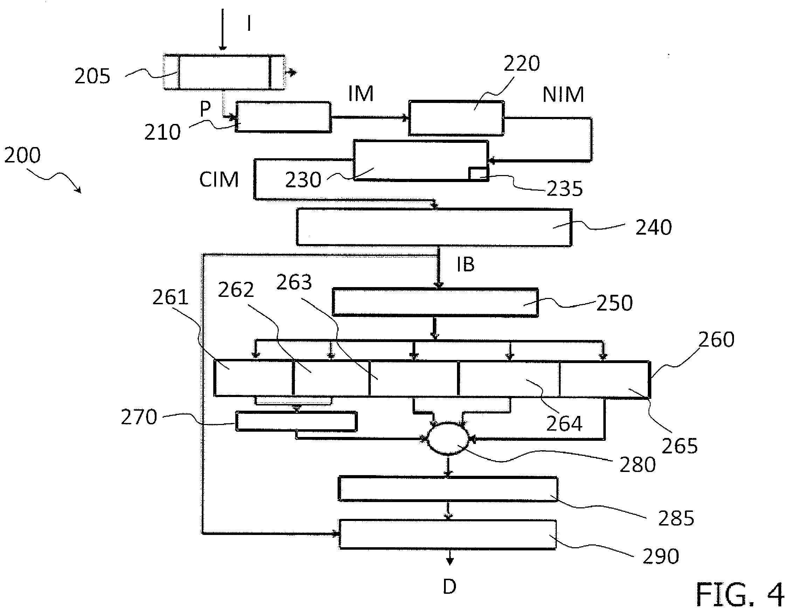

In figure 4 it is shown a flow diagram representing the method according to the invention, indicated collectively by the numerical reference 200, implemented by the electronic processing unit E.

With the numerical reference 205 it is indicated a image grabbing step, which is performed by the video-camera 7 and a related acquisition electronics. The video-camera acquires an image I of the surface of the component at a given frame rate, preferably 70 fps (frame per second), outputting an acquired digital image P which is, in the embodiment shown, a gray-scale image.

Then, a image erosion step 210 is performed on such acquired digital image P, outputting an eroded image IM, which pixels are ordered in rows and columns. The image erosion step is part of a pre-processing of the digital image P directed to implement contour preserving smoothers aimed to ease successive contour detection. Contour preserving smoothers are meant to eliminate not only noise, but also texture, since the latter tends to disturb contour detection.

In order to reduce texture and noise, in place of a linear filtering, it is performed an adaptive smoothing through the erosion operator, which is one of the two basic operators in the area of mathematical morphology (the other being dilation), typically applied to binary images. This operator works however also on gray-scale images, as a gray-scale (or gray-level) image is simply one in which the only colors are shades of gray. Gray-scale is chosen since less information needs to be provided for each pixel with respect to a color image. In fact a 'gray' color is one in which the red, green and blue components all have equal intensity in RGB space and so it is only necessary to specify a single intensity value for each pixel, as opposed to the three intensities needed to specify each pixel in a full color image. The gray-scale intensity of the digital image P is stored preferably as an 8-bit integer giving 256 possible different shades of gray from black to white. Preferably, the levels are evenly spaced then the difference between successive gray-levels is significantly better than the gray-level resolving power of the human eye. The use of gray-scale images is also advantageous as they are very common, in part because much of the current display and image capture hardware can only support 8-bit images. In addition, gray-scale images are entirely sufficient for many tasks and so there is no need to use more complicated and harder-to-process color images.

The erosion step is implemented through a rank order filter (ROF), in which, the gray levels on points $\rho\_i \in \aleph(r)$ i=1,...,N are ordered and the weights of local averaging depend on the rank positions in the ordering. The ordering criterium is from the darkest to the brightest pixel, and setting the rank to 0 gives erosion.

The effects of erosion 210 are, for instance:

- gray-scale erosion with a flat disk shaped structuring element will generally darken the image;
- bright regions surrounded by dark regions shrink in size, and dark regions surrounded by bright regions grow in size;
- small bright spots in images will disappear as they are eroded away down to the surrounding intensity value, and small dark spots will become larger spots.

The effect of the erosion step 210 is most marked at places in the image where the intensity changes rapidly, and regions of fairly uniform intensity will be left more or less unchanged except at their edges.

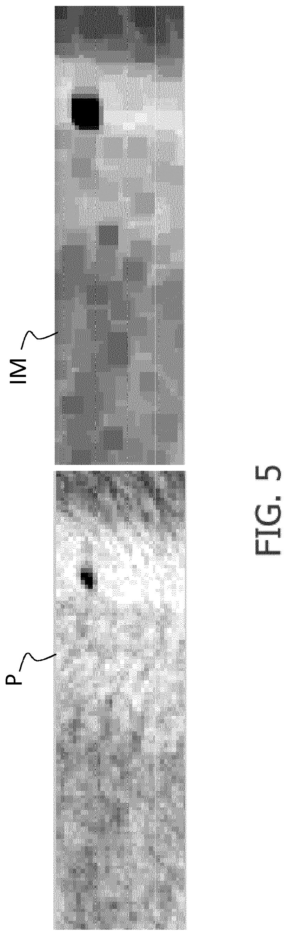

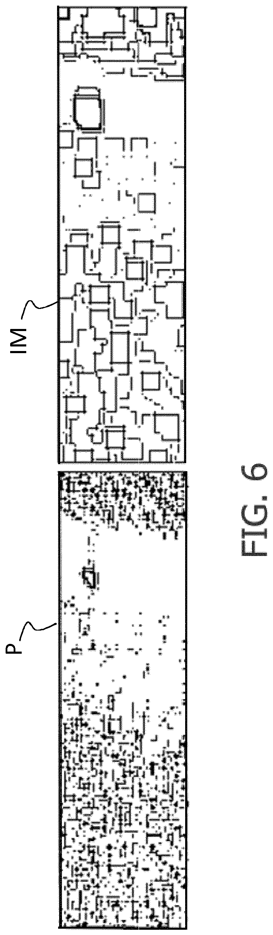

Figure 5 shows a small part of the acquired digital image P of a car hood surface (left) and the effect of erosion using a disk shaped structuring element (right), obtaining the eroded image IM. Figure 6 shows some contours of the feature of the digital image P and of the eroded image IM in a black and white representation in order to better appreciate the difference in the size of the features of the two images. It can be observed that the flat disk shaped kernel causes small peaks in the image to disappear and valleys to become wider.

Such eroded image IM then undergoes a normalization step 220, outputting a normalized image NIM, having values ranging from 0 to 1.

Then, on the normalized image NIM is performed a contour detection step 230, which uses a monogenic filtering 235.

The contour detection step 230 outputs a detected contours image values CIM with values ranges between 0.5 and 1, such values identifying the filter threshold used in the example to identify the contours. Such contour detection step 230 is based principally on a monogenic filtering 235

In the following some information to introduce the use of the contour detection step 230 with monogenic filtering 235 will be given.

The contour detection step 230 is chosen since the importance of phase in human perception of images has been demonstrated by the experiments of Oppenheim and Lim in 1981, as shown also in A V Oppenheim, J S Lim, "The importance of phase in signals", Proceedings of the IEEE, Vol. 69, No. 5, pp. 529-541, May 1981. Further psychological evidence indicates that the human visual system responds strongly to points in a natural image where the phase information is highly ordered. Rather than assume a feature is a point of maximal intensity gradient, it is here considered the Local Energy Mode, which postulates that features are perceived at points in an image where the Fourier components are maximally in phase.

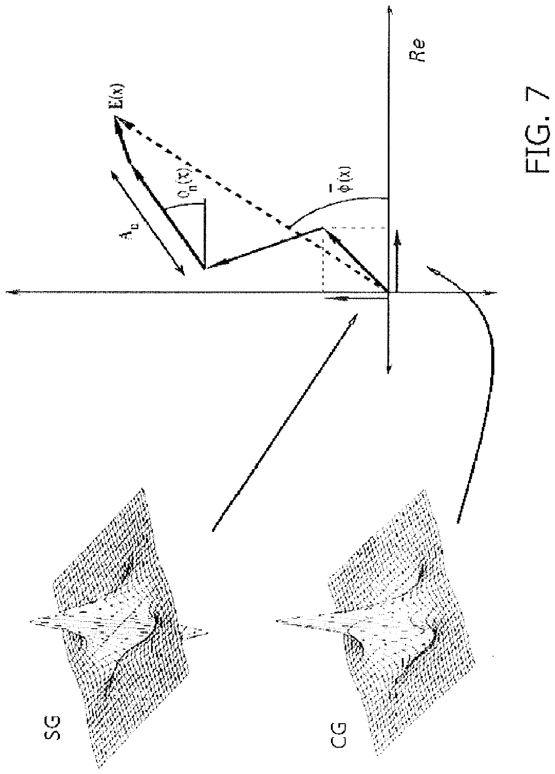

For what regards the measurement of phase congruency at a point in a mono-dimensional signal, , such local, complex valued, Fourier components at a location x in the signal will each have an amplitude $A_n(x)$ and a phase angle $\varphi_n(x)$. The magnitude of the vector from the origin to the end point is the Local Energy, $|E(x)|$. Figure 7 represents the Fourier components Local Energy, $|E(x)|$ in the complex plane.

A possible measure of phase congruency $PC_1$ developed is:

$$PC_1(x) = \frac{|E(x)|}{\sum_n A_n(x)} \qquad (1)$$

Under the definition (1) phase congruency $PC_1$ is the ratio of the Local Energy $|E(x)|$ to the overall path length taken by the local Fourier components in reaching the end point.

If all the Fourier components are in phase all the complex vectors would be aligned and the ratio of $|E(x)|/\sum_n A_n(x)$ would be 1. If there is no coherence of phase the ratio falls to a minimum of 0. Phase congruency provides a measure that is independent of the overall magnitude of the signal making it invariant to variations in image illumination and/or contrast. Fixed threshold values of feature significance can then be used over wide classes of images.

The implementation of this method to obtain phase congruency provides for instance to calculate local frequency information by convolving the normalized image NIM with banks of quadrature pairs of log-Gabor wavelets.

For each point in the signal the responses from the quadrature pairs of filters at different scales will form response vectors that encode phase and amplitude. Local frequency information is obtained typically by applying quadrature pairs of log-Gabor filters over six orientations and three or four scales. In figure 7 are shown two log-Gabor filters, sine log-Gabor SG and cosine log-Gabor CG, for the imaginary and real components .

Phase congruency values are calculated for every orientation. This information are combined as follow: at each point in the image compute a Phase Congruency covariance matrix G:

$$G = \begin{bmatrix} \sum PC_x^2 & PC_x FC_y \\ PC_x PC_y & \sum PC_y^2 \end{bmatrix} \qquad (2)$$

where $PC_x$ and $PC_y$ are the x and y components of phase congruency PC for each orientation. The minimum and maximum singular values correspond to the minimum and maximum moments of phase congruency PC.

The magnitude of a maximum moment, M, gives an indication of the significance of the feature.

If a minimum moment, m, is also large we have an indication that the feature has a strong 2D component and can be classified as a corner.

The principal axis, about which the moment is minimized, provides information about the orientation of the feature.

The minimum and maximum values of the phase congruency singular values/moments are bounded to the range 0-1 and are dimensionless. This provides invariance to illumination and contrast.

Phase congruency moment values can be used directly to determine feature significance. Typically a threshold of 0.3 - 0.4 can be used.

It can be shown that this measure $PC_1$ of phase congruency is a function of the cosine of the deviation of each phase component from the mean:

$$PC_1(x) = \frac{\sum_n A_n\left(cos(\phi(x) - \overline{\phi}(x)\right)}{\sum_n A_n(x)} \qquad (3)$$

The phase congruency approach as discussed presents some inconvenients:

- if the local amplitude is nearly zero for all scales, the phase congruency becomes unstable (noise and numerical errors),
- if the local amplitude of one scale is much higher than in the other scales, the congruency is always close to one (missing frequency spread),
- the phase congruency is a function proportional to the sum of cosines of the phase differences and the cosine function is (nearly) one for a relatively wide range of angles and
- the approach becomes much more complicated and numerically more complex for the bidimensional (2D) case (sampling of orientations).

The first problem is solved in literature by introducing an additional constant in the denominator of eq. 1 and by subtracting the estimated noise energy. The second problem is solved by the introduction of a function which measures the frequency spread. The third problem was solved by replacing the cosine function with some function of the cosine and the absolute value of the sine, which is nearly linear in wide range of angles.

A new, more accurate measure, of the phase congruency $PC_2$ is therefore:

$$PC_2(x) = \frac{\sum_n W(x)\lfloor A_n\left(cos(\phi(x)-\overline{\phi}(x))\right)-\left|sin(\phi(x)-\overline{\phi}(x))\right|\rfloor - T\rfloor}{\sum_n A_n(x)+\varepsilon} \qquad (4)$$

With W(x) is indicated a factor that weights for frequency spread (congruency over many frequencies is more significant than congruency over a few frequencies). T indicates a noise threshold. With $\varepsilon$ it is indicated a small constant incorporated to avoid division by zero. Only energy values that exceed noise threshold T, the estimated noise influence, are counted in the result. The symbols $\lfloor \rfloor$ denote that the enclosed quantity is equal to itself when its value is positive, and zero otherwise.

In practice local frequency information is obtained via banks of Gabor wavelets tuned to different spatial frequencies, rather than via the Fourier transform. The appropriate noise threshold, T is readily determined from the statistics of the filter responses to the image.

The above approach for mono-dimensional (or 1D) signal becomes much more complicated and numerically more complex for the 2D case (sampling of orientations). This drawback can be overcome by using the approach of the 2D monogenic signal as dictated by in Felsberg, M. and Sommer, G. (2001) "The monogenic signal", IEEE Transactions on Signal Processing,49(12):3136-3144. Further information can also be found in: Kovesi, P.: "An implementation of Falsberg's monogenic filters", August 2005 (URL: http://www.csse.uwa.edu.au/~pk/research/matlabfns/).

The analytic signal and the corresponding filters (quadrature filters) are well suited for detecting local properties and features of signals. The so called split of identity is the fundamental property of quadrature filters. The local amplitude of the filter response corresponds to a quantitative measure of a structure (including the contrast) and the local phase corresponds to a qualitative measure of a structure (step, peak, etc.). However, the analytic signal is only defined for one-dimensional signals. Quadrature filters consist of two filters: an even and an odd band-pass filter. For images, the fundamental problem is to find an odd filter with an isotropic energy distribution. In the frequency domain, the corresponding problem is to find positive and negative frequencies in a two-dimensional domain. This is not possible if the odd filter is constrained to be scalar valued. However, if the filter is allowed to be vector valued, one can find an odd filter with isotropic energy. The corresponding (vector valued) transfer function is also odd and has unit magnitude. It is therefore a multidimensional generalization of the sign-function. Using this 'real' two-dimensional analytic signal (the monogenic signal), approaches based on the one-dimensional analytic signal can be applied to two-dimensional signals without sampling the orientation or using adaptive filtering.

Therefore, since an odd isotropic filter can be constructed for two dimensions for vector valued filters, for instance the following filters $H_1$ and $H_2$ can be introduced in frequency domain:

$$H_1(u_1,u_2) = i\,\frac{u_1}{\sqrt{u_1^2+u_2^2}} \qquad \text{and} \qquad H_2(u_1,u_2) = i\,\frac{u_2}{\sqrt{u_1^2+u_2^2}} \qquad (5)$$

The vector $\boldsymbol{H}=(H_1, H_2)$ has unit length in any direction because $|(H_1,H_2)| = \sqrt{|H_1|^2 + |H_1|^2} = 1$ and it is odd because a reflection through the origin yields $\boldsymbol{H}(-u_1,-u_2) = -\boldsymbol{H}(u_1,u_2)$. If the vector $\boldsymbol{H}$ is reduced to one dimension, it is obtained $H(u) = i\frac{u}{|u|} = isign(u)$ which is the transfer function of the Hilbert transform. The vector $\boldsymbol{H}(u_1,u_2)$ is the transfer function of a transform which is called the Riesz transform. The spatial representation of the vector $\boldsymbol{H}$ is the convolution kernel of the Riesz transform and it reads

$$\left(h_1(x_1,x_2), h_2(x_1,x_2)\right) = \left(-\frac{x_1}{2\pi(x_1^2+x_2^2)^{\frac{3}{2}}}, -\frac{x_2}{2\pi(x_1^2+x_2^2)^{\frac{3}{2}}}\right) \qquad (6)$$

Combining a signal f with its Riesz transform, according to the following relation for a multidimensional generalization of the analytic signal, i.e. the monogenic signal $f_M$:

$$f_M(x_1,x_2) = \left(f(x_1,x_2), (h_1 \star f)(x_1,x_2), (h_2 \star f)(x_1,x_2)\right) \qquad (7)$$

The local amplitude $A_f$ of the monogenic signal $f_M$ is the vector norm:

$$A_f = \sqrt{f^2 + (h_1 \star f)^2 + (h_2 \star f)^2} \qquad (8)$$

as in the case of the analytic signal.

Then the phase is redefined. For a triple are needed two phases instead of one. Using the standard spherical coordinates, the following equations are obtained:

$$f = A_f cos(\varphi) \qquad (9)$$

$$(h_1 \star f) = A_f sin(\varphi)cos(\theta) \text{ where } \varphi \in [0,2\pi] \text{ and } \theta \in [0,\pi] \qquad (10)$$

$$(h_2 \star f) = A_f sin(\varphi)sin(\theta) \qquad (11)$$

In practical applications, the infinite impulse response of the Hilbert kernel is reduced to a local filter mask by use of a band-pass filter. The resulting filters are called a pair of quadrature filters. The same can be applied for the Riesz transform. The resulting filters form a triple of spherical quadrature filters (SQF): the radial band-pass filter and the radial band-pass filtered kernels $h_1$ and $h_2$.

Now, the implementation of the monogenic filter 235, which makes use of a Gaussian derivative filter will be discussed.

On the basis of the previously discussed- in equations (5)-(11) for instance- reduction of the infinite impulse response of the Hilbert kernel to a local filter mask by use of a band-pass filter and the corresponding application to the Riesz transform, giving a triple of spherical quadrature filters (SQF): the radial band-pass filter and the radial band-pass filtered kernels $h_1$ and $h_2$, the band-pass filter is here chosen as a Gaussian derivative filter (step 235 in figure 4). Therefore, the step 235 is performed with the radial band-pass filter with a transfer function $B(u_1, u_2)$:

$$B(u_1,u_2) = ((u_1^2 + u_2^2)/f_0)^{\frac{a}{2}} exp\left(-\sigma^2(u_1^2 + u_2^2)\right) \qquad (12)$$

where $a=1$ and

$$\frac{\sqrt{a}}{\tau}$$

is the center frequency and a is the bandwidth parameter.

The parameter $f_0$ is:

$$f_0 = \frac{1}{minWavelngth * mult^{(s-1)}} \qquad (13)$$

where *minWaveLength* indicates the wavelength of smallest scale filter, *mult* indicates a scaling factor between successive filters with *s=1:3.*

The bandwidth of this filter is given by:

$$b = \frac{1}{2} ln \frac{W_{-1}(c)}{W_0(c)} \, , \quad c = -\frac{4\overline{a}}{e} \qquad (14)$$

Therefore, on the basis of the above evaluation of the phase congruency, edges or contours of the images, CIM, are individuated in the image by the step 230 using the monogenic filter 235, which is a monogenic gaussian derivative filter according to equations (12)-(14).

Such detected contours image values CIM are subjected to a step of defect estimation by boundaries estimation 240 in which on the basis of the edges or contours detected in the digital image P by the step 230, the boundaries of shapes in the image P are identified by the edges. Thus, step 240 yields a set of boundaries $IB=(IB_1...IB_N)$ identified in the digital image P.

Such set of boundaries $IB=(IB_1...IB_N)$ defines shapes which can be directly identified as defects D, in a identification step 290.

However, such set of boundaries $IB=(IB_1...IB_N)$ is also supplied to a step of defect classification 250, which includes boundaries evaluation sub-steps 260, in which geometrical properties of the identified boundaries $IB=(IB_1...IB_N)$ are calculated. Such evaluation sub-steps 260 comprise:

evaluating the objects perimeter 261
evaluating the objects area 262
evaluating the objects eccentricity 263
evaluating the objects major length 264
evaluating the objects centroid 265

On the basis of the steps of evaluating the objects perimeter 261 and evaluating the objects area 262 it is also obtained in step 270 a roundness metric of the objects.

Therefore each of these sub-steps 261-265 and 270 yields as result a measurement of a property of each of said boundaries $IB=(IB_1...IB_N)$.

The result of the evaluation steps 260 and 270 for each boundary is then collected in a step 280 and compared with defect parameters specifics in a step 285. If the results obtained from the evaluation steps 260 and 270 are within ranges defined for a certain type of defect in the step 290 the identified object is classified as a certain type of defect.

In a possible variant it is used a monogenic filter as the band-pass filter indicated in equation (11) a log-Gabor filter instead of a Gaussian derivative filter. For the applications in the following section we always used the radial band-pass filter with the transfer function

$$B(u_1, u_2) = exp\left( -\frac{\left( log\left( \frac{\sqrt{u_1^2 + u_2^2}}{f_0} \right) \right)^2}{2 \left( log(sigmaOnf) \right)^2} \right) \qquad (15)$$

where

$$f_0 = \frac{1}{minWavelngth * mult^{(s-1)}} \qquad (16)$$

In equation (15) *sigmaOnf* indicates the ratio of the standard deviation of the Gaussian describing the log Gabor filter's transfer function in the frequency domain to the filter center frequency. *minWaveLength* indicates the wavelength of smallest scale filter, *mult* indicates the scaling factor between successive filters.

A testing of the method with the Gaussian derivative filtering, comparing the results provided by skilled workers used for the quality assessment to ones, as shown that, for instance, on 50 painted car body shells, only in 2% of the cases missing or false defects were identified, in 74% cases the system implementing the method according to the invention produced results in accordance with the skilled workers estimation and in 24% of cases there were defects identified by the system alone.

As apparent from the description above, the method and system according to the invention enable detecting painting defects in components, in particular moving along a production line, in a precise and quick manner, without the need of a reference signal, through relatively simple and inexpensive means.

By using the Gaussian derivative monogenic filter it is obtained an identification which is quicker also with respect to the other monogenic filters and has a superior resolution.

Obviously, without prejudice to the principle of the invention, the construction details and the embodiments may vary widely with respect with what has been described and illustrated purely by way of example without departing from the scope of protection of the present invention.

Of course, different method of classification and also of boundaries estimation can be used in connection with the filtering step used by the method according to the invention.

In the same way, the system implementing the method can be different from the one described, provided that includes means for acquiring a digital image of the painted surface, either a videocamera or a photocamera.

The electronic processing unit can include the acquisition means, such as digital to analog converters and other acquisition boards, or such electronic components can be included in the video-camera or even in a separated component. The electronic processing unit can be represented by a single processing unit, such as a personal computer, or by a plurality of processing units.

## Claims

1. Method for detecting defects (D) in painting of components, in particular of motor-vehicle bodies of the type comprising acquiring a digital image (P) of a surface of the components which has been painted, processing (210, 220, 230, 235) the digital image to obtain contours of shapes (CIM) in said digital image (P), said processing (210, 220, 230, 235) including performing a contour detection step (230) including filtering (235) the image (P) to obtain said contours (CIM), performing an estimation of boundaries ($IB_1...IB_N$)) from said contours (CIM), estimating (290) the defects (D) by said estimation (240) of boundaries ($IB_1...IB_N$)) identified by said contours (CIM),
**characterised in that**
said filtering step (235) comprises applying to said digital image (P) a monogenic filter using a band pass filter to obtain said contours,
said monogenic filter (235) using as band-pass filter a Gaussian derivative filter.

2. Method according to claim 1, **characterised in that** includes performing a classification step (250) on said boundaries ($IB_1...IB_N$) obtained by said estimation of boundaries ($IB_1...IB_N$) identified by said contours (CIM) in order to identify defects (D).

3. Method according to claim 2, **characterised in that** it includes, after said step of estimation (240) of boundaries ($IB_1....IB_N$), classifying the defects (D) obtained by said estimation (240) of boundaries ($IB_1....IB_N$)).

4. Method according to claim 3, **characterised in that** said defect classification step (250) includes
performing boundaries evaluation steps (260, 270), in which geometrical properties of the identified boundaries ($IB_1...IB_N$) are calculated;
collecting (280) the results of said evaluation steps (260, 270);
comparing (285) said results with defect parameters specifications in order to classify an object defined by a given boundary as a defect.

5. Method according to any of the previous claims, **characterised in that** said processing (210, 220, 230, 235) the image to obtain contours (CIM) in said image (P) includes, prior performing said contour detection step (230), operating an erosion step (210) on the digital image (P) to produce an eroded image (IM).

6. Method according to claim 5, **characterised in that** said processing (210, 220, 230, 235) further includes, after said erosion step (210), a normalization step (220) to produce a normalized image (NIM), having values ranging from zero to one, said normalized image (NIM) being supplied to said filtering step (235) which outputs a detected contours image values (CIM) with values ranging between 0.5 and 1.

7. System for detecting defects in painting of components, in particular of motor-vehicle bodies of the type comprising a videocamera or a photocamera, configured for acquiring a digital image (P) of a surface of the components which has been painted, and processing means (E) configured for performing the method of any of claims 1 to 6.

**Patentansprüche**

1. Verfahren zur Erkennung von Mängeln (D) bei der Lackierung von Komponenten, insbesondere von Kraftfahrzeugaufbauten des Typs, das das Erfassen eines digitalen Bildes (P) einer Oberfläche der Komponenten, die lackiert wurde, Verarbeiten (210, 220, 230, 235) des digitalen Bildes zur Erlangung von Konturen von Formen (CIM) in dem digitalen Bild (P) umfasst, wobei das Verarbeiten (210, 220, 230, 235) das Durchführen eines Konturendetektionsschrittes (230) einschließlich Filtern (235) des Bildes (P) zur Erlangung der Konturen (CIM), Durchführen einer Abschätzung von Grenzen ($IB_1...IB_N$) aus den Konturen (CIM), Abschätzen (290) der Mängel (D) durch die Abschätzung (240) von durch die Konturen (CIM) identifizierten Grenzen ($IB_1...IB_N$) umfasst,
   **dadurch gekennzeichnet, dass**
   der Filterschritt (235) das Anwenden eines monogenen Filters auf das digitale Bild (P) umfasst, indem ein Bandpassfilter verwendet wird, um die Konturen zu erlangen,
   wobei das monogene Filter (235) als Bandpassfilter ein Gauß-Ableitungsfilter verwendet.

2. Verfahren nach Anspruch 1, **dadurch gekennzeichnet, dass** es das Durchführen eines Klassifizierungsschrittes (250) an den durch die Abschätzung von Grenzen ($IB_1...IB_N$) erlangten Grenzen ($IB_1...IB_N$), die durch die Konturen (CIM) identifiziert wurden, umfasst, um Defekte (D) zu identifizieren.

3. Verfahren nach Anspruch 2, **dadurch gekennzeichnet, dass** es nach dem Schritt der Abschätzung (240) von Grenzen ($IB_1...IB_N$) das Klassifizieren der durch die Abschätzung (240) von Grenzen ($IB_1...IB_N$) erlangten Defekte (D) umfasst.

4. Verfahren nach Anspruch 3, **dadurch gekennzeichnet, dass** der Defektklassifizierungsschritt (250) umfasst:

   Durchführen von Grenzbewertungsschritten (260, 270), bei denen geometrische Eigenschaften der identifizierten Grenzen ($IB_1...IB_N$) berechnet werden;
   Sammeln (280) der Ergebnisse der Bewertungsschritte (260, 270);
   Vergleichen (285) der Ergebnisse mit Defektparameterspezifikationen, um ein durch eine vorgegebene Grenze definiertes Objekt als einen Defekt zu klassifizieren.

5. Verfahren nach einem der vorhergehenden Ansprüche, **dadurch gekennzeichnet, dass** das Verarbeiten (210, 220, 230, 235) des Bildes zur Erlangung von Konturen (CIM) in dem Bild (P) vor einer Durchführung des Konturendetektionsschrittes (230) das Einwirken eines Erosionsschrittes (210) auf das digitale Bild (P) umfasst, um ein erodiertes Bild (IM) zu erzeugen.

6. Verfahren nach Anspruch 5, **dadurch gekennzeichnet, dass** das Verarbeiten (210, 220, 230, 235) nach dem Erosionsschritt (210) des Weiteren einen Normalisierungsschritt (220) zum Erzeugen eines normalisierten Bildes (NIM) umfasst, das Werte im Bereich von Null bis Eins aufweist, wobei das normalisierte Bild (NIM) dem Filterschritt (235) zugeführt wird, der Werte eines Bildes mit detektierten Konturen (CIM) im Bereich zwischen 0,5 und 1 ausgibt.

7. System zur Erkennung von Defekten bei der Lackierung von Komponenten, insbesondere von Kraftfahrzeugaufbauten des Typs, das eine Videokamera oder eine Fotokamera, ausgelegt zum Erfassen eines digitalen Bildes (P) einer Oberfläche der Komponenten, die lackiert wurde, und Verarbeitungsmittel (E) umfasst, die zum Durchführen des Verfahrens nach einem der Ansprüche 1 bis 6 gestaltet sind.

**EP 2 770 322 B1**

**Revendications**

1. Procédé de détection de défauts (D) dans la peinture de composants, en particulier de carrosseries de véhicules automobiles, du type comprenant l'acquisition d'une image numérique (P) d'une surface des composants qui ont été peints, le traitement (210, 220, 230, 235) de l'image numérique pour obtenir des contours de formes (CIM) dans ladite image numérique (P), ledit traitement (210, 220, 230, 235) comportant le fait de réaliser une étape de détection de contours (230) comportant le fait de filtrer (235) l'image (P) pour obtenir lesdits contours (CIM), d'effectuer une estimation des limites ($IB_1...IB_N$) à partir desdits contours (CIM), d'estimer (290) les défauts (D) par ladite estimation (240) de limites ($IB_1...IB_N$) identifiées par lesdits contours (CIM),
   **caractérisé en ce que**
   ladite étape de filtrage (235) comprend le fait d'appliquer à ladite image numérique (P) un filtre monogénique utilisant un filtre passe-bande pour obtenir lesdits contours,
   ledit filtre monogénique (235) utilise en tant que filtre passe-bande un filtre dérivé Gaussien.

2. Procédé selon la revendication 1, **caractérisé en ce qu'**il comporte le fait de réaliser une étape de classification (250) sur lesdites limites ($IB_1...IB_N$) obtenues par ladite estimation de limites ($IB_1...IB_N$) identifiées par lesdits contours (CIM) afin d'identifier des défauts (D).

3. Procédé selon la revendication 2, **caractérisé en ce qu'**il comporte, après ladite étape d'estimation (240) de limites ($IB_1...IB_N$), le fait de classer les défauts (D) obtenus par ladite estimation (240) de limites ($IB_1...IB_N$).

4. Procédé selon la revendication 3, **caractérisé en ce que** ladite étape de classification de défauts (250) comporte le fait :

   de réaliser les étapes d'évaluation de limites (260, 270), dans lesquelles les propriétés géométriques des limites identifiées ($IB_1...IB_N$) sont calculées.
   de collecter (280) les résultats desdites étapes d'évaluation (260, 270) ;
   de comparer (285) lesdits résultats aux spécifications de paramètres de défauts afin de classer un objet défini par une limite donnée en tant que défaut.

5. Procédé selon l'une des revendications précédentes, **caractérisé en ce que** ledit traitement (210, 220, 230, 235) de l'image pour obtenir des contours (CIM) dans ladite image (P) comporte, avant de réaliser ladite étape de détection de contours (230), le fait d'exécuter une étape d'érosion (210) sur l'image numérique (P) pour produire une image érodée (IM).

6. Procédé selon la revendication 5, **caractérisé en ce que** ledit traitement (210, 220, 230, 235) comporte en outre, après ladite étape d'érosion (210), une étape de normalisation (220) pour produire une image normalisée (NIM), ayant des valeurs comprises entre zéro et un, ladite image normalisée (NIM) étant fournie à ladite étape de filtrage (235) qui délivre en sortie des valeurs d'image à contours détectés (CIM) avec des valeurs comprises entre 0,5 et 1.

7. Système de détection de défauts dans la peinture de composants, en particulier de carrosseries de véhicules automobiles du type comprenant une caméra vidéo ou un appareil photo, configuré(e) pour acquérir une image numérique (P) d'une surface des composants qui ont été peints, et des moyens de traitement (E) configurés pour mettre en oeuvre le procédé de l'une des revendications 1 à 6.

FIG. 1

FIG. 2

FIG. 3

EP 2 770 322 B1

EP 2 770 322 B1

I

205

210 P

200

IM

220 NIM

CIM 230 235

240

IB

261 262 263

250

270 264 260

265

280

285

290

D

**FIG. 4**

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6941016 B1

### Non-patent literature cited in the description

- **A V OPPENHEIM ; J S LIM.** The importance of phase in signals. *Proceedings of the IEEE,* May 1981, vol. 69 (5), 529-541
- **FELSBERG, M. ; SOMMER, G.** The monogenic signal. *IEEE Transactions on Signal Processing,* 2001, vol. 49 (12), 3136-3144
- **KOVESI, P.** *An implementation of Falsberg's monogenic filters,* August 2005, http://www.csse.uwa.edu.au/~pk/research/matlabfns